Europäisches Patentamt

(19) European Patent Office

Office européen des brevets

(11) Publication number: **0 076 688**
**B1**

(12) EUROPEAN PATENT SPECIFICATION

(45) Date of publication of patent specification: **26.06.85**

(21) Application number: **82305277.4**

(22) Date of filing: **04.10.82**

(51) Int. Cl.⁴: **H 04 M 1/64**

(54) Telephone answering and message recording system.

(30) Priority: **05.10.81 JP 157602/81**

(43) Date of publication of application:
**13.04.83 Bulletin 83/15**

(45) Publication of the grant of the patent:
**26.06.85 Bulletin 85/26**

(84) Designated Contracting States:
**CH DE FR GB IT LI NL SE**

(56) References cited:
**DE-A-2 642 254**
**DE-A-2 951 581**
**DE-A-3 003 545**
**US-A-3 798 380**
**US-A-4 134 032**

(73) Proprietor: **Oki Electric Industry Company,
Limited
7-12, Toranomon 1-chome Minato-ku
Tokyo 105 (JP)**

(72) Inventor: **Sagara, Iwao
Oki Electric Ind. Co., Ltd. 7-12 Toranomon
1-chome
Minato-ku Tokyo (JP)**

(74) Representative: **George, Sidney Arthur et al
GILL JENNINGS & EVERY 53-64 Chancery Lane
London WC2A 1HN (GB)**

Courier Press, Leamington Spa, England.

## Description

This invention relates to a terminal station telephone answering and message recording system, and in particular to such a system which uses a solid-state memory for recording speech and can operate in a two-way speech mode.

Most prior telephone answering systems have used magnetic tape for recording the speech, the magnetic tape being usually wound on a reel. However, such prior telephone answering systems have the disadvantages that it takes a long time to rewind the tape, it is difficult to find the position of the start of the speech on the tape when playing back, two tape recorders must be used when two-way speech communication is carried out, and/or only one mode of recording or playback is available at a time.

German Patent Specification No. 30 03 545 discloses a telephone answering system in which the use of magnetic tape is avoided by the provision of a digital memory for storing speech signals. The input analog speech signals from a local microphone or from the telephone line are converted by an analog-digital converter into digital speech signals for feeding to the memory. A digital-analog converter subsequently converts speech signals read out from the memory into analog signals for feeding to a speaker and/or to the telephone line.

However, that system is not capable of selecting between different items in the memory for transmission to different callers; the whole of the pre-recorded material is transmitted to each caller.

German Patent Specification No. 26 42 254 discloses an answering system which is located at a central office of a message-taking service. Areas of digital speech signal storage are allocated to individual subscribers who are making use of the service. If one of those subscribers (subscriber A) is called, the caller is informed, by a recorded announcement, that the subscriber is not available, but that a message can be left. If the caller decides to leave a message, that message is recorded in the relevant storage area. When the subscriber A telephones the central office, the recorded message is read out of the storage area, together with any relevant pre-recorded information, such as the date and time of receipt of the message.

However, that system allows only one-way message-taking, i.e. any caller can leave messages for a subscriber to the service, but the subscriber cannot communicate with the caller via the recorded message facility.

It is an object of the present invention to provide a telephone answering and message recording system at a terminal station, by means of which any person using the system can record messages intended for other specific persons, who can then access the relevant part of the digital speech signal store by transmitting a personal push button code over the telephone line.

According to the invention there is provided a terminal station telephone answering and message recording system, comprising an analog-digital converter for converting input analog speech signals from a microphone or from a telephone line to digital signals; a digital memory for storing the digital speech signals; and a digital-analog converter by which digital signals read out from the digital memory are converted to analog signals for feeding selectively to a speaker and to the telephone line; characterised in that the digital memory comprises a plurality of groups of memory cells, each group comprising a plurality of cells; group selection switching means is provided to select between the groups of memory cells for feeding the digital signals thereto; cell selection switching means is coupled to the output of the group selection switching means to select required memory cells in the selected group; output switching means is coupled to the outputs of the groups of memory cells to select between the groups for connection to the digital-analog converter; a PB receiver detects a PB (push button) code received from the telephone line to control the switching means according to the detected PB code; in that the system is first initiated to a fixed answering mode in which a first group of memory cells is in a recording mode and a second group is in a reproducing mode; in that upon receipt of a particular PB code the mode of the system is changed to an adaptive oral communication mode in which a third group is in the recording mode and a fourth group is in the reproducing mode; and in that selection of memory cells in the third and fourth groups is determined by the received PB code.

An embodiment of the invention will now be described, by way of example, with reference to the accompanying drawings, wherein:

Figure 1 is a block diagram of a telephone answering and message recording system according to the invention,

Figure 2 is a schematic pictorial view showing the appearance of the system, and

Figures 3A and 3B illustrate the operational timing sequences of the system.

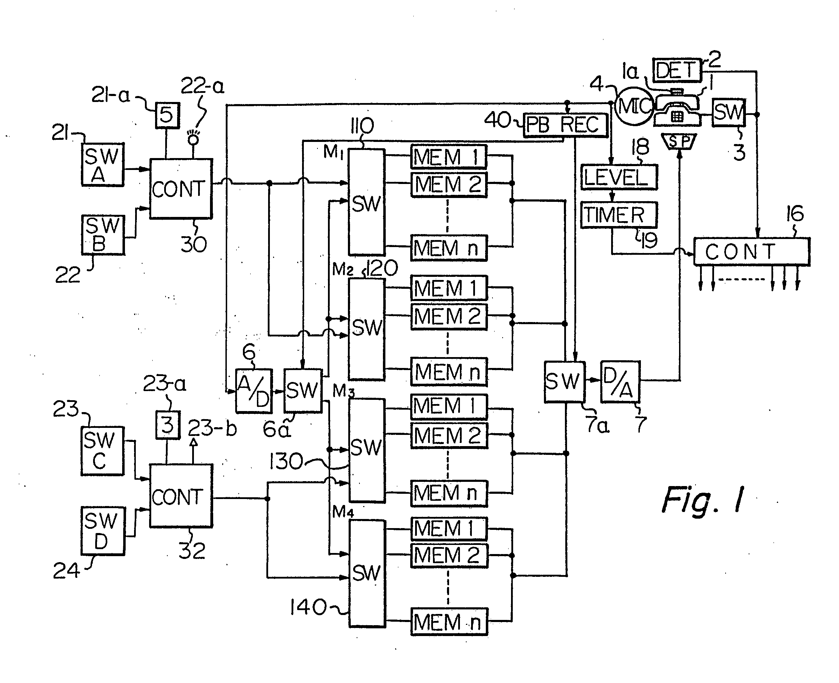

Referring to Figure 1, an electro-magnet 1a is provided for lifting a handset of a conventional telephone 1 when a call to the telephone arrives. A call detector 2 detects reception of the telephone call and initiates a control circuit 16. A switch 3 switches modes between the ordinary telephone mode (without the present system) and a telephone answering mode (using the present system). A microphone 4 picks up both oral speech in front of the microphone and sound from the receiver of the handset of the telephone 1. A speaker 5 may transmit sound to a person using the system and to the microphone in the handset of the telephone 1.

The system may be coupled to a telephone line either through acoustical coupling or through electrical coupling. The figures show the use of acoustical coupling, in which the handset is lifted by the electro-magnet 1a when a call is connected to the telephone set, and the handset is acoustically coupled to the microphone 4 and the speaker 5. In the case of electrical coupling, the handset is not lifted, but the lines to the microphone and the speaker are coupled to a telephone line through an electrical switch (not shown).

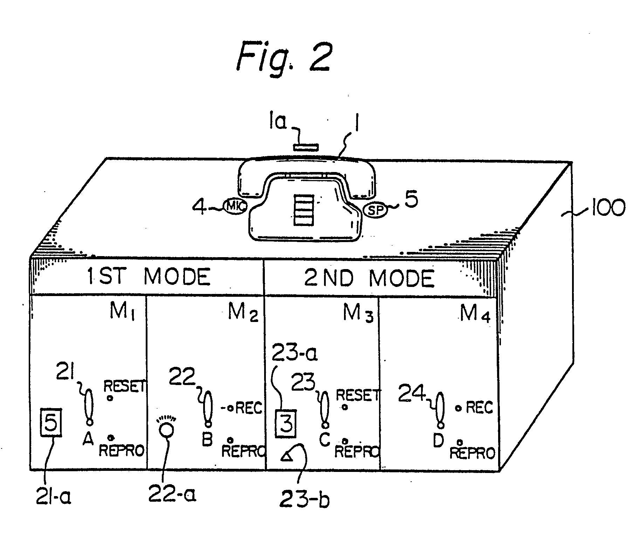

Referring also to Figure 2, a housing 100 of the system has four units $M_1$, $M_2$, $M_3$ and $M_4$. The system has two operational modes, a first fixed answering mode, and a second adaptive oral communication mode. The first mode uses the units $M_1$ and $M_2$, and the second mode uses the units $M_3$ and $M_4$.

The unit $M_1$ has an A-switch 21 with two positions RESET and REPRODUCTION, and a numeral indicator 21-a. This unit is concerned with the message recording function, and memories associated with the unit $M_1$ record the speech of the caller. When the A-switch is in the REPRODUCTION position, the content of the memories, i.e. the recorded speech, is reproduced through the speaker 5, and the user can listen to the recorded message. The system has a plurality of channels of memories which can record a plurality of speech signals, and it is assumed that the contents of the channels are reproduced in sequence. When the A-switch is set in the RESET position, the content of the memories is cleared or erased. The numeral indicator 21-a indicates the number of calls which were received by the system during the user's absence.

The unit $M_2$ is concerned with recording of the master speech which is transmitted to a remote person who calls the system. A plurality of memories is associated with the unit $M_2$, and the content of those memories is transmitted to the telephone line at a predetermined interval. The unit $M_2$ has a B-switch 22 with RECORD and REPRODUCTION positions, and an indicator lamp 22-a. When speech is to be recorded, the B-switch 22 is set to the RECORD position, and speech on the microphone 4 is recorded in the associated memories. During the recording operation, the indicator lamp 22-a lights to indicate that operation. When the B-switch 22 is in the REPRODUCTION position, the recorded content in the memories is reproduced through the speaker 5 for monitoring purposes. The B-switch is kept in a neutral position when the system is coupled to a telephone line for on-line operation.

The unit $M_3$ is concerned with recording the speech of a caller selectively into a selected memory. Selection of the memory is accomplished by a particular PB code which is the combination of two frequencies of a push button signal. The unit $M_3$ has a C-switch 23 having RESET and REPRODUCTION positions, a numeral indicator 23-a which indicates a selected channel or a selected memory, and a push button switch 23-b which, when pressed, increments the indication of the numeral indicator 23-a. When the C-switch is in the REPRODUCTION position, the content of the memory indicated by the indicator 23-a is reproduced through the speaker 5, and channels to be reproduced are switched sequentially upon depressing the button switch 23-b. When the C-switch is in the RESET position, the content of the memory indicated by the indicator 23-a is erased. The C-switch is kept in a neutral position when the system is coupled to a telephone line.

The unit $M_4$ is concerned with recording local speech into a selected memory. Selection of the memory is accomplished by the PB code. The unit $M_4$ has a D-switch 24 which has RECORD and REPRODUCTION positions. When the D-switch is in the RECORD position, local speech reaching the microphone 4 is recorded in the memory which is selected by the PB code beforehand. When the D-switch is in the REPRODUCTION position, the content of the memories is reproduced through the speaker 5 for local monitoring purposes.

In the block diagram of Figure 1, a speech signal at the microphone 4 in analog form is applied to an analog-digital converter 6, which converts the signal to digital form. The digital speech output signal of the analog-digital converter 6 is applied to one of the memory groups of the units $M_1$, $M_2$, $M_3$ and $M_4$, according to operational mode, via a group selection switch 6a and one of switches 110, 120, 130 and 140. The switch 6a selects the unit $M_1$ when the system is in a fixed answering mode to record remote speech, and selects the unit $M_2$ when the B-switch 22 is set in the RECORD position to record local speech in the fixed answering mode. On the other hand, the switch 6a selects the unit $M_4$ when the system is in an adaptive oral communication mode which is initiated by the PB code detected by a PB receiver 40. The combination of the two frequencies of the PB code causes the switch 6a to select the unit $M_3$ or $M_4$, and then to select one of the memories $MEM_1$ to $MEM_n$ in the unit according to the particular PB code. Therefore, it should be appreciated that each PB code and its related memory ($MEM_1$ to $MEM_n$) may relate to a particular person who uses the system. In other words, when the PB code is a first code ($f_1$, $f_2$), the speech of the output of the A/D converter 6 is recorded in the first memory $MEM_1$ of the unit $M_4$, and when the PB code is a second code ($f_1$, $f_3$), the speech is recorded in the second memory $MEM_2$ in the unit $M_4$.

The switch 6a selects the unit $M_3$ when the system is in an adaptive oral communication mode (when the PB code is received), and the D-switch 24 is in the RECORD position, so that local speech is recorded in one of the memories in the unit $M_3$. When the unit $M_3$ is selected, local speech on the microphone 4 is recorded in one of the memories $MEM_1$ to $MEM_n$ which is designated by the PB code detected by the PB receiver 40 in the unit $M_3$. In the unit $M_3$, each memory $MEM_1$ to $MEM_n$ and/or the related PB code concerns a particular person who uses the present system.

An output switch 7a selects one of the outputs of the memory groups according to the operational mode, and the selected memory output is applied to a digital-analog converter 7, which converts the digital signal to an analog signal. The converted analog signal is applied to the speaker 5 to provide an oral sound signal.

The control circuit 16 provides control pulses to operate the units (including the memories and the switches 6a, 7a, 110, 120, 130 and 140) according to a predetermined sequence. The control circuit 16 is initiated by the output of the call detector 2. The circuit 16 is implemented either by wired logic hardware or by a programmed computer.

A control 30 controls the memories of the units $M_1$ and $M_2$ when those units are operative. A control 32 controls the memories of the units $M_3$ and $M_4$ when those units are operative.

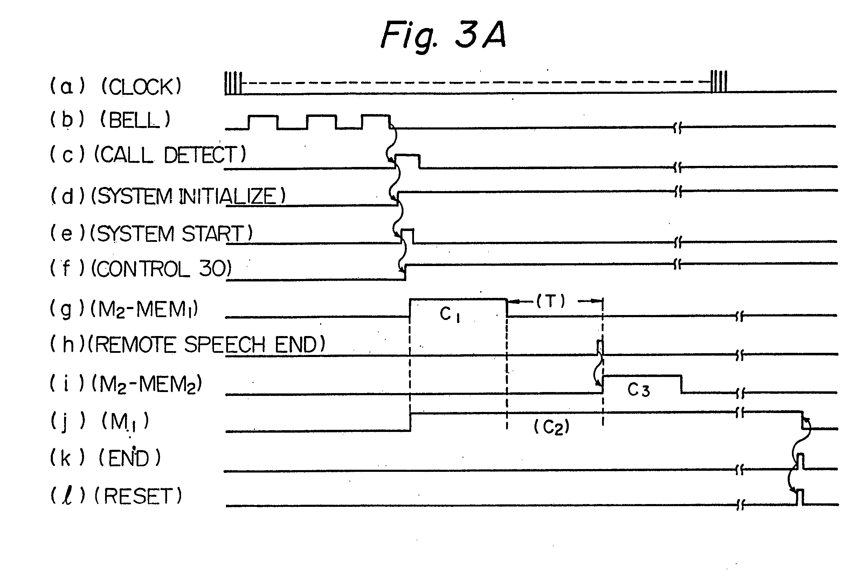

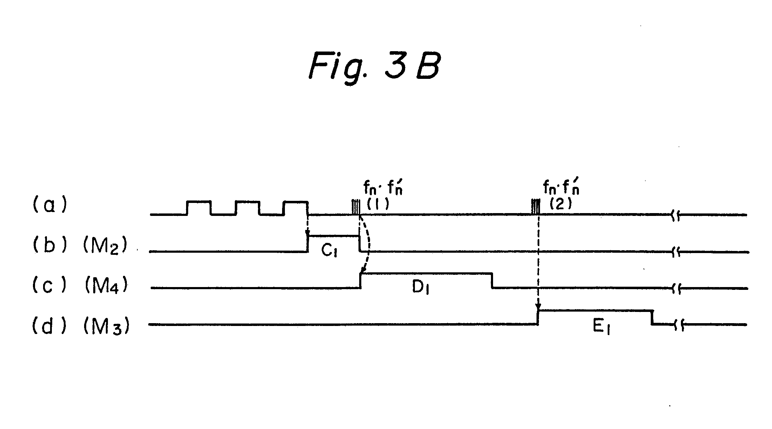

Next, the timing of the operation of the system will be described with reference to Figures 3A and 3B.

In a first fixed answering mode it is assumed that at least one fixed local speech is recorded in the memories $MEM_1$ to $MEM_n$ in the unit $M_2$, and the content of the memories $MEM_1$ to $MEM_n$ is reproduced with a predetermined interval which is adjustable by a timer (not shown), or the sequence control of the read-out timing of the memories $MEM_1$ to $MEM_n$ by the control circuit 16. An example of the fixed local speech is "This is Ratner speaking", or "who is speaking?".

The system operates with a clock signal which has a predetermined short interval (Figure 3A(a)).

In the fixed answering mode, when the system is called the bell of the telephone rings three times (see Figure 3A(b)). When the bell has rung three times, the call detector 2 recognises reception of a call (Figure 3A(c)) and initiates the system to the fixed answering mode (Figure 3A(d)), and an operation start pulse is provided by the control circuit 16 (Figure 3A(e)). The start pulse of Figure 3A(e) causes the control 30 to operate (Figure 3A(f)). At the initial stage, the unit $M_2$ is set to the reading mode, and the unit $M_1$ is set to the writing mode, and then the system begins to operate.

The content $C_1$ of the first memory $MEM_1$ in the unit $M_2$ is read out (Figure 3A(g)) and is transmitted to a remote subscriber. After a predetermined interval (T), the content ($C_3$) of the second memory $MEM_2$ of the unit $M_2$ is transmitted (Figure 3A(i)) to the remote subscriber. The remote subscriber answers $C_2$ to the first fixed speech $C_1$. Therefore, the conversation will be as follows.

$C_1$: This is Ratner speaking. Who is speaking?
$C_2$: This is Sagara.
$C_3$: I am not in just now. Please record your message in this recording system.
$C_4$: When you return home, please call me.

The unit $M_1$ records both the remote speeches $C_2$ and $C_4$, and the fixed local speeches $C_1$ and $C_3$ so that the complete stream of the conversation may be reproduced by listening only to the unit $M_2$.

The interval T between successive local speeches (see Figure 3A(h)) may be determined by (1) a timer, (2) sequence timing control by the control 16 for reading out the memories, or (3) the level detector 18 and the timer 19. In the third case, when the level detector 18 and the timer 19 detect that the signal level is lower than a predetermined level for a predetermined duration, it is determined that the remote speech is finished, and the pulse signal of Figure 3A(h) is provided by the timer 19, and then the local speech $C_3$ begins.

When a remote speaker finishes the whole speech and puts the handset down, the call detector 2 detects the end of the speech and provides an end pulse (Figure 3A(k)), which terminates the operation of the system by having the control 16 provide a reset pulse (Figure 3A(l)). That reset pulse (Figure 3A(l)) terminates the whole operation of the system, and the recording operation of the unit $M_1$ is also finished.

In a second adaptive oral communication mode, it is assumed that a plurality of fixed local speeches are recorded in each of the memories $MEM_1$ to $MEM_n$ in the group $M_4$ according to the particular person and/or the particular PB code. When the present system is used in a family, examples of the local speeches might be:

$MEM_1$ (Mother): I have gone to the super-market.
$MEM_2$ (Father): I have gone to the company.

In the adaptive oral communication mode, when the bell rings three times (see Figure 3B(a)), the call detector 2 (Figure 2) detects reception of a call, and initiates the system to the fixed answering mode. Then the unit $M_2$ is set to the read mode, and the unit $M_1$ is set to the record mode. The content $C_1$ of the unit $M_1$ is then read out, and the local speech "This is Ratner speaking. Who is speaking?" is transmitted to the remote subscriber.

However, that local speech $C_1$ is interrupted upon receipt of the PB code which is detected by the PB receiver 40. The PB code has the combination of two frequencies of a PB signal of a push button telephone system. When the PB receiver 40 detects one of the PB codes, the receiver controls the switches 6a and 7a so that the switch 6a selects the unit $M_3$, and the switch 7a selects the unit $M_4$. Hence, upon receipt of the PB code, the operational mode is switched from the fixed answering mode to the adaptive oral communication mode.

A remote subscriber can transmit a PB code by operating a conventional key pad or a PB pad, which provides a sound having two frequencies.

In Figure 3B, when the remote subscriber depresses a key pad to transmit the particular PB code ($f_n$, $f_n'$) the operational mode is switched. The fixed speech $C_1$ is interrupted, and a new speech $D_1$ is transmitted from the unit $M_4$. It is assumed that the PB code ($f_n$, $f_n'$) relates to the first memory $MEM_1$ which stores the speech "I have gone to the supermarket". When the remote subscriber wishes to record this speech, he depresses the same PB code ($f_n$, $f_n'$) again, and then his speech $E_1$ (I am going to my friend, Peter's house) is recorded in the area related to that PB code ($f_n$, $f_n'$) of the unit $M_3$.

When a mother who is away from home wishes to know whether or not someone called her, she dials the system, and transmits the PB code ($f_n$, $f_n'$) and another PB code ($f_m$, $f_m'$), and then she can listen to the content of the units $M_4$ and $M_3$ relating to the designated PB code ($f_n$, $f_n'$). Hence, she can recognise that her son called her and left the message "I am going to my friend, Peter's house".

Furthermore, a remote subscriber can revise the speech recorded in the unit $M_4$ by transmitting the particular combination of the PB codes. In the above example, when the mother transmits the PB code ($f_n$, $f_n'$) which designated the area of the mother in the unit $M_4$, and another PB code ($f_p$, $f_p'$), the unit $M_4$ is ready to be revised by the remote speech. Then she says "Come back home as soon as possible. Dinner will be ready at six o'clock". When the son calls the system after the mother has revised the content of the unit $M_4$, he listens to her revised speech "Come back home as soon as possible. Dinner will be ready at six o'clock", instead of the first speech "I have gone to the supermarket". Similarly, the son can record this speech again in the present system by operating the key pad which transmits the particular PB code.

As described above, in the adaptive oral communication mode, two remote persons can communicate with each other through the telephone answering system, even though they do not converse directly.

It should be appreciated that the units $M_3$ and $M_4$ have a plurality of cells ($MEM_1$ to $MEM_n$), so a plurality of pairs of persons may communicate with each other. In this case, the combination of the PB codes may be kept secret from other persons to keep the conversation confidential.

In the above explanation, each memory cell ($MEM_1$ to $MEM_n$) records a single speech. When the speech is short, a memory cell may record two or more units of speech. In that case, an additional memory address designator (not shown) is provided to designate the start address of the selected memory to record the second speech in the same memory cell.

In the above embodiment it is preferable that each memory cell ($MEM_1$ to $MEM_n$) has the capacity to record speech equal to or longer than 60 seconds. The necessary capacity of a memory cell for recording each second depends upon the method of recording. When a frequency of 0.3—3.2 kHz is to be recorded, and the sampling frequency is 8 kHz, and each sample is quantized into 8 bits in a PCM coding system, 64 kilo-bits are necessary for recording each second. On the other hand, when the ADPCM (Adaptive Differential PCM) is used, 16—32 kilo-bits are enough to record each second.

A memory ($MEM_1$ to $MEM_n$) of each of the units $M_1$ to $M_4$ is implemented by a C-MOS memory, an N-MOS memory, or a bubble memory. When a semiconductor memory (C-MOS or N-MOS) is used, a power source backed up by a battery must be used, so that the content of the memories is not erased even when there is some trouble with a commercial power supply.

As described above in detail, according to the present invention a semiconductor memory is used to record speech instead of the previously-used magnetic tape. Therefore, no rewinding operation is necessary, and the speech is obtained merely by reading out the semiconductor memory. Further, an adaptive oral communication mode, in which two persons may communicate with each other through the present system is possible, by reading and/or revising the content of the memory.

## Claims

1. A terminal station telephone answering and message recording system, comprising an analog-digital converter (6) for converting input analog speech signals from a microphone (4) or from a telephone line to digital signals; a digital memory ($M_1$, $M_2$, $M_3$, $M_4$) for storing the digital speech signals; and a digital-analog converter (7) by which digital signals read out from the digital memory are converted to analog signals for feeding selectively to a speaker (5) and to the telephone line; characterised in that the digital memory comprises a plurality of groups ($M_1$, $M_2$, $M_3$, $M_4$) of memory cells, each group comprising a plurality of cells ($MEM_1$—$MEM_n$); group selection switching means (6a) is provided to select between the groups of memory cells for feeding the digital signals thereto; cell selection switching means (110, 120, 130, 140) is coupled to the output of the group selection switching means to select required memory cells in the selected group; output switching means (7a) is coupled to the outputs of the groups of memory cells to select between the groups for connection to the digital-analog converter (7); a PB receiver (40) detects a PB (push button) code received from the telephone line to control the switching means according to the detected PB code; in that the system is first initiated to a fixed answering mode in which a first group ($M_1$) of memory cells is in a recording mode and a second group ($M_2$) is in a reproducing mode; in that upon receipt of a particular PB code the mode of the system is changed to an adaptive oral communication mode in which a third group ($M_3$) is in the recording mode and a fourth group ($M_4$) is in the reproducing mode; and in that selection of memory cells in the third and fourth groups ($M_3$, $M_4$) is determined by the received PB code.

2. A system according to claim 1, characterised in that the microphone (4) and the speaker (5) are acoustically coupled to a handset of a telephone (1).

3. A system according to claim 1, characterised in that the microphone (4) and the speaker (5) are electrically coupled to the telephone line through a switch.

4. A system according to any preceding claim, characterised by a level detector (18) coupled to the microphone (4) to detect if the speech level is lower than a predetermined level; and a timer (19) to determine if the time during which the speech level is lower than the predetermined level is longer than a predetermined duration, in order to detect the finish of speech from a remote subscriber and to begin local speech.

5. A system according to claim 1, characterised in that the analog-digital converter (6) and the digital-analog converter (7) encode and decode, respectively, a PCM (pulse code modulation) signal, an ADPCM (adaptive differential PCM) signal or an LPC signal.

## Patentansprüche

1. Endstellen-Telefonanrufbeantwortungs- und -nachrichtenaufzeichnungssystem mit einem Analog/Digital-Umsetzer (6) zum Umsetzen analoger Sprachsignale, die über ein Mikrofon (4) oder eine Fernsprechleitung eingegeben werden, in digitale Signale; einem digitalen Speicher ($M_1$, $M_2$, $M_3$, $M_4$) zum Speichern der digitalen Sprachsignale; und einem Digital/Analog-Umsetzer (7), durch den digitale Signale, die aus dem digitalen Speicher ausgelesen werden, in analoge Signale für die wählbare Zuführung zu einem Lautsprecher (5) und der Fernsprechleitung umgesetzt werden, dadurch gekennzeichnet, daß der digitale Speicher mehrere Gruppen ($M_1$, $M_2$, $M_3$, $M_4$) aus Speicherzellen aufweist, von denen jede Gruppe mehrere Zellen ($MEM_1$—$MEM_n$) aufweist; ein Gruppenwählschaltmittel (6a) zum Wählen unter den Gruppen von Speicherzellen, um diesen die digitalen Signale zuzuführen, vorgesehen ist; ein Zellenwählschaltmittel (110, 120, 130, 140) am Ausgang des Gruppenwählschaltmittels angeschlossen ist, um gewünschte Speicherzellen in der gewählten Gruppe auszuwählen; ein Ausgangsschaltmittel (7a) an den Ausgängen der Gruppen von Speicherzellen angeschlossen, um unter den Gruppen eine Auswahl für den Anschluß an den Digital/Analog-Umsetzer (7) zu treffen; ein Tasten-Empfänger (40) ein über die Fernsprechleitung empfangenes codiertes Tastenzeichen feststellt, um eine Schaltmittelsteuerung entsprechend dem festgestellten codierten Tastenzeichen zu bewirken; daß zuerst ein fester Anrufbeantwortungsbetrieb des Systems ausgelöst wird, bei dem sich eine erste Speicherzellengruppe ($M_1$) in einem Aufzeichnungsbetrieb und eine zweite Gruppe ($M_2$) in einem Wiedergabebetrieb befindet; daß bei Empfang eines bestimmten codierten Tastenzeichens die Betriebsart des Systems auf einen adaptiven Sprachübertragungsbetrieb umgeschaltet wird, bei dem sich eine dritte Gruppe ($M_3$) im Aufzeichnungsbetrieb und eine vierte Gruppe ($M_4$) im Wiedergabebetrieb befindet; und daß die Auswahl von Speicherzellen der dritten und vierten Gruppe ($M_3$, $M_4$)

durch das empfangene codierte Tastenzeichen bestimmt wird.

2. System nach Anspruch 1, dadurch gekennzeichnet, daß das Mikrofon (4) und der Lautsprecher (5) akustisch mit einem Handapparat eines Fernsprechers (1) gekoppelt sind.

3. System nach Anspruch 1, dadurch gekennzeichnet, daß das Mikrofon (4) und der Lautsprecher (5) elektrisch über einen Schalter mit der Fernsprechleitung gekoppelt sind.

4. System nach einem der vorstehenden Ansprüche, gekennzeichnet durch einen mit dem Mikrofon (4) verbundenen Pegeldetektor (18) zum Feststellen, ob der Sprachpegel niedriger als ein vorbestimmter Pegel ist, und einen Zeitgeber (19), um festzustellen, ob die Zeit, während der der Sprachpegel niedriger als der vorbestimmte Pegel ist, länger als eine vorbestimmte Dauer ist, um das Ende einer Rede eines entfernten Teilnehmers festzustellen und mit der örtlichen Rede zu beginnen.

5. System nach Anspruch 1, dadurch gekennzeichnet, daß der Analog/Digital-Umsetzer (6) und der Digital/Analog-Umsetzer (7) jeweils die Codierung und Decodierung eines PCM-Signals (Pulscodemodulationssignals) eines ADPCM-Signals (eines adaptiven Differential-PCM-Signals) oder eines LPC-Signals (LPC= lineare prädktive Codierung) bewirken.

## Revendications

1. Système-répondeur et-enregistreur de messages téléphoniques de poste terminal, comprenant un convertisseur analogique-numérique (6) pour convertir des signaux analogiques de parole d'entrée provenant d'un microphone (4) ou d'une ligne téléphonique en signaux numériques; une mémoire numérique ($M_1$, $M_2$, $M_3$, $M_4$) pour mémoriser les signaux numériques de parole; et un convertisseur numérique-analogique (7) par lequel les signaux numériques lus dans la mémoire numérique sont convertis en signaux analogiques pour les envoyer sélectivement à un hautparleur (5) et à la ligne téléphonique; caractérisé en ce que la mémoire numérique comprend un ensemble de groupes ($M_1$, $M_2$, $M_3$, $M_4$) de cellules de mémoire, chaque groupe comprenant un ensemble de cellules ($MEM_1$—$MEM_n$); en ce qu'il comprend un moyen commutateur de sélection de groupe (6a) pour faire une sélection entre les groupes de cellules de mémoire pour leur envoyer les signaux numériques; un moyen commutateur de sélection de cellule (110, 120, 130, 140) relié à la sortie du moyen commutateur de sélection de groupe pour sélectionner des cellules de mémoire voulues dans le groupe sélectionné; un moyen commutateur de sortie (7a) relié aux sorties des groupes de cellules de mémoire pour faire une sélection entre les groupes pour une connexion au convertisseur numérique-analogique (7); un récepteur de BP (40) agencé pour détecter un code de bouton-poussoir (BP) reçu de la ligne téléphonique pour commander les moyens commutateurs selon le code BP détecté; en ce que le système est d'abord déclenché dans un mode de réponse fixe où un premier groupe ($M_1$) de cellules de mémoire est dans un mode d'enregistrement et un deuxième groupe ($M_2$) est dans un mode de reproduction; en ce qu'à la réception d'un code BP particulier, le mode du système est changé en un mode de communication orale adaptatif dans lequel un troisième groupe ($M_3$) est dans le mode d'enregistrement et un quatrième groupe ($M_4$) est dans le mode de reproduction; et en ce que la sélection de cellules de mémoire dans les troisième et quatrième groupes ($M_3$, $M_4$) est déterminée par le code BP reçu.

2. Systéme selon la revendication 1, caractérisé en ce que le microphone (4) et le haut-parleur (5) sont couplés acoustiquement à un combiné d'un téléphone (1).

3. Systéme selon la revendication 1, caractérisé en ce que le microphone (4) et le haut-parleur (5) sont couplés électriquement à la ligne téléphonique par l'intermédiaire d'un commutateur.

4. Système selon l'une quelconque des revendications 1 à 3, caractérisé en ce qu'il comprend un détecteur de niveau (18) relié au microphone (4) pour détecter si le niveau de parole est inférieur à un niveau prédéterminé; et une horloge (19) pour déterminer si le temps pendant lequel le niveau de parole est inférieur au niveau prédéterminé est plus long qu'une durée prédéterminée, de manière à détecter la fin des paroles prononcées par un abonné à distance et à commencer des paroles locales.

5. Système selon la revendication 1, caractérisé en ce que le convertisseur analogique-numérique (6) et le convertisseur numérique-analogique (7) codent et décodent respectivement un signal à modulation par impulsions codées (PCM), un signal à modulation par impulsions codées différentiel adaptatif (ADPCM) ou un signal LPC.

Fig. 1

*Fig. 2*

# Fig. 3A

(a) (CLOCK)

(b) (BELL)

(c) (CALL DETECT)

(d) (SYSTEM INITIALIZE)

(e) (SYSTEM START)

(f) (CONTROL 30)

(g) ($M_2$-$MEM_1$)  $C_1$  (T)

(h) (REMOTE SPEECH END)

(i) ($M_2$-$MEM_2$)  $C_3$

(j) ($M_1$)  ($C_2$)

(k) (END)

(l) (RESET)

0 076 688

Fig. 3 B